# EUROPÄISCHE PATENTSCHRIFT

(11) **EP 3 084 784 B1**
(45) Veröffentlichungstag und Bekanntmachung des Hinweises auf die Patenterteilung: **08.07.2020**
(21) Anmeldenummer: 14823896.7
(22) Anmeldetag: 11.12.2014
(51) Int. Cl.: H01F 38/18, H01F 27/02, H02K 11/00

(54) **DREHÜBERTRAGER UND ELEKTROMOTOR**
ROTARY TRANSMITTER AND ELECTRIC MOTOR
TRANSFORMATEUR TOURNANT ET MOTEUR ÉLECTRIQUE

(30) Priorität: 20.12.2013 DE 102013021746
(43) Veröffentlichungstag der Anmeldung: 26.10.2016
(73) Patentinhaber: SEW-EURODRIVE GmbH & Co. KG, 76646 Bruchsal (DE)
(72) Erfinder: MEGERLE, Thomas, 76646 Graben-Neudorf (DE); PODBIELSKI, Leobald, 76199 Karlsruhe (DE); REINHARD, Ingo, 67063 Ludwigshafen (DE)
(86) Internationale Anmeldenummer: PCT/EP2014/003321
(87) Internationale Veröffentlichungsnummer: WO 2015/090539

(56) Entgegenhaltungen:
- WO-A1-02/067276
- CN-A- 101 728 073
- DE-A1-102005 047 451

## Beschreibung

Die Erfindung betrifft ein System und einen Elektromotor.

**Die** WO 02/067276 A1 **zeigt einen Drehübertrager für läufererregte elektrische Maschinen, wobei ein Primärteil und ein Sekundärteil in Achsrichtung nebeneinander angeordnet sind.**

Aus der DE 10 2009 014 960 A1 ist eine fremderregte Synchronmaschine mit Drehübertrager bekannt.

Die US 2008 / 02 04 182 A1 zeigt ein System zur berührungslosen Energieübertragung.

Aus der US 2013 / 03 22 889 A1 ist ein Drehübertrager für Werkzeugmaschinen bekannt.

Der Erfindung liegt daher die Aufgabe zugrunde, einen Drehübertrager und einen Elektromotor weiterzubilden, wobei die Sicherheit des Elektromotors verbessert werden soll.

Erfindungsgemäß wird die Aufgabe bei dem System nach den in Anspruch 1 angegebenen Merkmalen und bei dem Elektromotor nach den in Anspruch 11 angegebenen Merkmalen gelöst.

Wichtige Merkmale der Erfindung bei dem Drehübertrager zur induktiven Energieübertragung von einer Primärspule an eine Sekundärspule, die drehfest mit einer Rotorwelle verbunden ist, welche relativ zur Primärspule drehbar gelagert ist, sind dass
die Sekundärspule einen Spulenkern und eine Sekundärwicklung, insbesondere Ringwicklung, aufweist, die in einem Aufnahmeteil aufgenommen sind, insbesondere wobei das Aufnahmeteil drehfest mit der Rotorwelle verbunden ist,
wobei ein Deckelteil mit dem Aufnahmeteil verbunden ist,
wobei die Sekundärwicklung zwischen dem Deckelteil und dem Aufnahmeteil angeordnet ist,
wobei der Spulenkern zwischen dem Deckelteil und dem Aufnahmeteil angeordnet ist,
wobei der Spulenkern eine Jochscheibe mit zumindest zwei über die Jochscheibe verbundenen Schenkeln aufweist, insbesondere wobei die Sekundärwicklung zwischen den Schenkeln angeordnet ist,
wobei das Deckelteil axial durchgehende, in Umfangsrichtung, insbesondere regelmäßig, voneinander beabstandete Ausnehmungen aufweist,
wobei der Radialabstandsbereich der jeweiligen Ausnehmung den Radialabstandsbereich des Spulenkerns oder zumindest eines ersten Schenkels des Spulenkerns überdeckt, insbesondere vollständig überdeckt,
wobei der von dem Deckelteil überdeckte axiale Bereich überlappt, insbesondere echt überlappt, insbesondere teilweise überdeckt, mit dem von dem Spulenkern überdeckten axialen Bereich, insbesondere wobei der Spulenkern in die jeweilige Ausnehmung axial hineinragt.

Von Vorteil ist dabei, dass die drehfest mit der Rotorwelle verbundene Sekundärwicklung stabilisierbar ist in dem Aufnahmeteil mittels des Deckelteils. Die bei hohen Umdrehungszahlen auf die Sekundärspule wirkenden Kräfte sind ausgleichbar mittels des Deckelteils.

Vorteilhafterweise ist ein Ausbrechen von in dem Aufnahmeteil angeordneter Vergussmasse verhinderbar mittels des Deckelteils. Dazu ist die Vergussmasse in das Aufnahmeteil drückbar mittels des Deckelteils.

Die mechanische Stabilität des Drehübertragers ist also verbessert mittels des Deckelteils, somit ist die Sicherheit des Drehübertragers verbessert.

Die Ausnehmungen in dem Deckelteil verbessern die induktive Kopplung der Primärspule mit der Sekundärspule im Vergleich zu einem Deckelteil ohne Ausnehmungen. Somit ist die Verlustleistung an dem Deckelteil reduzierbar und der Umweltschutz verbessert.

Bei einer vorteilhaften Ausgestaltung sind die Ausnehmungen jeweils als Kreisringabschnitt ausgeformt. Von Vorteil ist dabei, dass die Form der Ausnehmungen an die Form des Spulenkerns anpassbar ist. Zwischen den Kreisringabschnitten angeordnete Beabstandungsbereiche verbessern die Stabilität des Deckelteils. Somit ist die Sicherheit verbessert.

Bei einer vorteilhaften Ausgestaltung ist der Spulenkern als Rotationskörper ausgeführt, der einen U-förmigen Querschnitt aufweist, insbesondere wobei die zum Querschnitt zugehörige Schnittebene die radiale und axiale Richtung enthält. Von Vorteil ist dabei, dass zwischen den Schenkeln des Spulenkerns die als Ringwicklung ausgeführte Sekundärspule anordenbar ist.

Bei einer vorteilhaften Ausgestaltung sind die beiden Schenkel jeweils ringförmig und konzentrisch, insbesondere zur Rotorwellenachse und/oder Achse der Ringwicklung, ausgeführt. Von Vorteil ist dabei, dass die rotierende Sekundärspule induktiv koppelbar ist mit der Primärspule, wobei der Radialabstandsbereich der Sekundärspule und der Radialabstandsbereich der Primärspule in jeder Rotationsposition der Sekundärspule miteinander überdeckbar sind.

Bei einer vorteilhaften Ausgestaltung sind die beiden Schenkel jeweils auf der dem Deckelteil zugewandten Seite der Jochscheibe angeordnet. Von Vorteil ist dabei, dass die Sekundärspule zur Primärspule hingewandt offen ausgeführt ist.

Bei einer vorteilhaften Ausgestaltung weist das Deckelteil im jeweiligen Beabstandungsbereich zwischen zwei in Umfangsrichtung benachbarten Ausnehmungen eine dünnere Wandstärke auf als die maximale axiale Wandstärke des Deckteils. Von Vorteil ist dabei, dass der dünn ausgeführte den Spulenkern überdeckende Beabstandungsbereich die induktive Kopplung zwischen der Primärspule und der Sekundärspule weniger stört als ein dicker ausgeführter Beabstandungsbereich.

Vorteilhafterweise ist die axiale Wandstärke des Deckelteils im Beabstandungsbereich gerade so gewählt, dass das Deckelteil stabil ausführbar ist und die induktive Kopplung zwischen Primärspule und Sekundärspule optimiert ist. Somit ist die Sicherheit des Drehübertragers verbessert und die Verlustleistung am Deckelteil minimierbar.

Bei einer vorteilhaften Ausgestaltung sind die in Umfangsrichtung zwischen den jeweils zueinander nächstbenachbarten Ausnehmungen angeordneten Beabstandungsbereiche des Deckelteils Stegabschnitte. Von Vorteil ist dabei, dass die Beabstandungsbereiche in Umfangsrichtung schmal ausführbar sind. Die Ausnehmungen sind in Umfangsrichtung also weiter ausgedehnt ausführbar als die Beabstandungsbereiche.

Bei einer vorteilhaften Ausgestaltung ist die axiale Wandstärke der Stegabschnitte kleiner als die maximale axiale Wandstärke des Deckteils. Von Vorteil ist dabei, dass die dünn ausgeführten Stegabschnitte die induktive Kopplung zwischen der Primärspule und der Sekundärspule weniger stören als dicker ausgeführte Stegabschnitte.

Bei einer vorteilhaften Ausgestaltung sind die Stegabschnitte radialstrahlenförmig angeordnet. Von Vorteil ist dabei, dass die Stegabschnitte in Umfangsrichtung regelmäßig verteilt anordenbar sind.

Bei einer vorteilhaften Ausgestaltung sind die Stegabschnitte als in Umfangsrichtung voneinander regelmäßig beabstandete, in axialer Richtung nicht durchgehende Kreisringabschnitte ausgeführt. Von Vorteil ist dabei, dass die Stabilität des Deckelteils verbessert ist.

Bei einer vorteilhaften Ausgestaltung wechseln die Stegabschnitte und die Ausnehmungen in Umfangsrichtung einander ab. Von Vorteil ist dabei, dass die Stabilität des Deckelteils verbessert ist.

Bei einer vorteilhaften Ausgestaltung sind die Ausnehmungen in Umfangsrichtung voneinander beabstandet mittels der Stegabschnitte. Von Vorteil ist dabei, dass die Stabilität des Deckelteils verbessert ist.

Bei einer vorteilhaften Ausgestaltung weist das Deckelteil weitere axial durchgehende, in Umfangsrichtung, insbesondere regelmäßig, voneinander beabstandete Ausnehmungen auf, wobei der Radialabstandsbereich der jeweiligen weiteren Ausnehmung den Radialabstandsbereich eines zweiten Schenkels des Spulenkerns überdeckt, insbesondere vollständig überdeckt, wobei der von dem Deckelteil überdeckte axiale Bereich überlappt, insbesondere echt überlappt, insbesondere teilweise überdeckt, mit dem von dem Spulenkern überdeckten axialen Bereich, insbesondere wobei der zweite Schenkel des Spulenkerns in die jeweilige weitere Ausnehmung axial hineinragt. Von Vorteil ist dabei, dass die Ausnehmungen und die weiteren Ausnehmungen an die Form des Spulenkerns anpassbar sind. Vorteilhafterweise sind also nur die Schenkel überdeckbar von den Ausnehmungen und der Radialabstandsbereich der zwischen den Schenkeln angeordneten Sekundärwicklung ist überdeckbar von dem Beabstandungsbereich zwischen den Ausnehmungen und den weiteren Ausnehmungen. Somit ist die Stabilität des Deckelteils verbessert.

Bei einer vorteilhaften Ausgestaltung sind die weiteren Ausnehmungen jeweils als Kreisringabschnitt ausgeformt, wobei die Ausnehmungen von den weiteren Ausnehmungen radial, also in radialer Richtung, beabstandet sind. Von Vorteil ist dabei, dass zwischen den Ausnehmungen und den weiteren Ausnehmungen angeordnete Beabstandungsbereiche das Deckelteil stabilisieren.

Bei einer vorteilhaften Ausgestaltung sind die Ausnehmungen auf kleinerem Radialabstand angeordnet als die weiteren Ausnehmungen. Von Vorteil ist dabei, dass die Ausnehmungen und die weiteren Ausnehmungen an die Form des Spulenkerns, insbesondere der Schenkel des Spulenkerns, anpassbar sind.

Bei einer vorteilhaften Ausgestaltung ist die axiale Wandstärke des Deckelteils zwischen zwei in Umfangsrichtung nächstbenachbarten Ausnehmungen und/oder zwischen zwei in Umfangsrichtung nächstbenachbarten weiteren Ausnehmungen kleiner als die Wandstärke des Deckelteils zwischen einer Ausnehmung und einer in radialer Richtung zu dieser nächstbenachbarten weiteren Ausnehmung. Von Vorteil ist dabei, dass das Deckelteil im Radialabstandsbereich der Sekundärwicklung dicker ausführbar ist als im Radialabstandsbereich der Schenkel des Spulenkerns. Somit ist die Stabilität des Deckelteils verbessert und zugleich die Verlustleistung der induktiven Kopplung zwischen der Primärspule und der Sekundärspule minimierbar.

Bei einer vorteilhaften Ausgestaltung überdeckt jede Ausnehmung einen gleichen ersten Umfangswinkel. Von Vorteil ist dabei, dass die Ausnehmungen in Umfangsrichtung regelmäßig verteilt in dem Deckelteil anordenbar sind. Somit ist die induktive Kopplung zwischen der Primärspule und der Sekundärspule gleichmäßig ausführbar.

Bei einer vorteilhaften Ausgestaltung überdeckt jede weitere Ausnehmung einen gleichen zweiten Umfangswinkel. Von Vorteil ist dabei, dass die weiteren Ausnehmungen in Umfangsrichtung regelmäßig verteilt in dem Deckelteil anordenbar sind. Somit ist die induktive Kopplung zwischen der Primärspule und der Sekundärspule gleichmäßig ausführbar.

Bei einer vorteilhaften Ausgestaltung sind der erste und zweite Umfangswinkel gleich groß. Von Vorteil ist dabei, dass das Deckelteil stabilisierbar ist mittels zwischen den Ausnehmungen und weiteren Ausnehmungen angeordneten Stegabschnitten.

Bei einer vorteilhaften Ausgestaltung ist der erste Schenkel des Spulenkerns auf kleinerem Radialabstand als der zweite Schenkel des Spulenkerns angeordnet. Von Vorteil ist dabei, dass die als Ringspule ausführbare Sekundärwicklung zwischen den Schenkeln anordenbar ist.

Bei einer vorteilhaften Ausgestaltung ist jeder Schenkel ringförmig ausgeführt und die Schenkel sind konzentrisch zur Wellenachse angeordnet. Von Vorteil ist dabei, dass die rotierende Sekundärspule induktiv koppelbar ist mit der Primärspule, wobei der Radialabstandsbereich der Sekundärspule und der Radialabstandsbereich der Primärspule in jeder Rotationsposition der Sekundärspule miteinander überdeckbar sind.

Bei einer vorteilhaften Ausgestaltung weist der Spulenkern einen U-förmigen Querschnitt auf. Von Vorteil ist dabei, dass die Sekundärspule zwischen den Schenkeln des Spulenkerns anordenbar ist.

Bei einer vorteilhaften Ausgestaltung ist in dem Aufnahmeteil Vergussmasse angeordnet, wobei die Vergussmasse stoffschlüssig verbunden ist mit dem Deckelteil. Von Vorteil ist dabei, dass Hohlräume in dem Aufnahmeteil ausfüllbar sind mittels der Vergussmasse. Somit ist die Massenverteilung in dem Aufnahmeteil vergleichmäßigbar. Also ist das Rotationsverhalten der Sekundärspule verbessert. Damit ist die Sicherheit des Drehübertragers verbessert.

Bei einer vorteilhaften Ausgestaltung ist das Deckelteil formschlüssig verbunden mit der Vergussmasse mittels zumindest einer Erhebung, insbesondere einem Haken, welche axial in die Vergussmasse hineinragt. Von Vorteil ist dabei, dass die Berührfläche von der Vergussmasse und dem Deckelteil vergrößerbar ist mittels der Erhebung. Somit ist die Sicherheit der Verbindung verbessert.

Bei einer vorteilhaften Ausgestaltung ist die Erhebung mit Hinterschnitt ausgeführt. Von Vorteil ist dabei, dass die Verbindung des Deckelteils mit der Vergussmasse in einfacher Art und Weise sicher ausführbar ist.

Bei einer vorteilhaften Ausgestaltung ist die Erhebung einstückig mit dem Deckelteil ausgeführt. Von Vorteil ist dabei, dass das Deckelteil in einfacher Art und Weise als Gussteil oder Frästeil herstellbar ist. Des Weiteren ist eine sichere Verbindung der Erhebung mit dem Deckelteil erreichbar.

Bei einer vorteilhaften Ausgestaltung ist das Deckelteil aus einem Material mit relativer Permeabilität kleiner als 10 hergestellt, insbesondere aus einem Faserwerkstoff, insbesondere aus einem faserverstärkten Kunststoff. Von Vorteil ist dabei, dass die Beeinflussung der induktiven Kopplung zwischen der Primärspule und der Sekundärspule kleiner ist je kleiner die relative Permeabilität des Materials des Deckelteils ist. Vorteilhafterweise weisen Faserwerkstoffe zugleich eine geringe relative Permeabilität und eine hohe Festigkeit auf.

Bei einer vorteilhaften Ausgestaltung ist das Deckelteil als Kunststoffspritzgussteil, Drehteil oder Frästeil ausgeführt. Von Vorteil ist dabei, dass das Deckelteil in einfacher Art und Weise herstellbar ist.

Bei einer vorteilhaften Ausgestaltung ist das Deckelteil formschlüssig mit dem Aufnahmeteil verbunden, insbesondere schraubverbunden, insbesondere mittels zumindest eines Schraubmittels. Von Vorteil ist dabei, dass das Deckelteil und das Aufnahmeteil miteinander schraubverbunden und formschlüssig verbunden mittels der Vergussmasse sind.

Vorteilhafterweise wird die Vergussmasse in das Aufnahmeteil eingefüllt, bevor das Deckelteil auf das Aufnahmeteil geschraubt wird. Dabei wird also das Deckelteil zumindest teilweise in die Vergussmasse gedrückt, so dass der Zwischenraum zwischen dem Deckelteil und dem Aufnahmeteil beziehungsweise der Sekundärspule vollständig ausfüllbar ist von der Vergussmasse.

Bei einer vorteilhaften Ausgestaltung erstreckt sich der Spulenkern in axialer Richtung weiter als die Sekundärwicklung, insbesondere wobei die Sekundärwicklung das Deckelteil berührt. Von Vorteil ist dabei, dass die Sekundärspule kompakt ausführbar ist.

Wichtige Merkmale der Erfindung bei dem Elektromotor, insbesondere einer fremderregten Synchronmaschine, aufweisend einen Rotor mit zumindest einer Rotorwelle und einen Drehübertrager, wie zuvor beschrieben und/oder nach einem der auf einen Drehübertrager gerichteten Schutzansprüche,
wobei in einem ersten axialen Bereich der Rotorwelle ein Rotorblechpaket und in einem zweiten axialen Bereich der Rotorwelle die Sekundärspule angeordnet ist,
wobei die Primärspule der Sekundärspule axial gegenüberstehend angeordnet ist,
sind, dass
der Rotor mit dem Deckelteil verbunden ist, wobei das Deckelteil axial zwischen der Sekundärspule und der Primärspule angeordnet ist.

Von Vorteil ist dabei, dass die Betriebssicherheit des Elektromotors verbessert ist, insbesondere bei hohen Motordrehzahlen. Die auf der Rotorwelle angeordnete Sekundärspule ist stabilisierbar mittels des Deckelteils. Vorteilhafterweise ist ein Ausbrechen von in dem Aufnahmeteil angeordneter Vergussmasse verhinderbar mittels des Deckelteils. Dazu ist die Vergussmasse in das Aufnahmeteil drückbar mittels des Deckelteils. Dabei sind sich lösende Bauteile oder Vergussmasse zwischen Aufnahmeteil und Deckelteil haltbar, gelangen also nicht in den Motorinnenraum.

Bei einer vorteilhaften Ausgestaltung weist das Aufnahmeteil einen Aufnahmebereich für eine Elektronik und einen Aufnahmebereich für die Sekundärspule auf. Von Vorteil ist dabei, dass das Aufnahmeteil kompakt ausführbar ist.

Bei einer vorteilhaften Ausgestaltung ist der Aufnahmebereich für die Elektronik auf größerem Radialabstand als der Aufnahmebereich für die Sekundärspule angeordnet. Von Vorteil ist dabei, dass das Aufnahmeteil kompakt ausführbar ist.

Bei einer vorteilhaften Ausgestaltung ist zwischen dem Aufnahmebereich für die Elektronik und dem Aufnahmebereich für die Sekundärspule ein Trennabschnitt angeordnet. Von Vorteil ist dabei, dass die Sekundärspule elektrisch isolierbar ist von den Bauteilen der Elektronik mittels des Trennabschnitts. Somit ist die Sicherheit des Motors verbessert.

Bei einer vorteilhaften Ausgestaltung ist der Trennabschnitt am Aufnahmeteil einteilig, also einstückig, ausgeformt. Von Vorteil ist dabei, dass das Aufnahmeteil in einfacher Art und Weise herstellbar ist.

Bei einer vorteilhaften Ausgestaltung ist das Deckelteil beabstandet von der Elektronik, insbesondere wobei zwischen dem Deckelteil und der Elektronik Vergussmasse angeordnet ist. Von Vorteil ist dabei, dass die Elektronik stoßgedämpft anordenbar ist zwischen dem Deckelteil und dem Aufnahmeteil mittels der Vergussmasse.

Bei einer vorteilhaften Ausgestaltung weist die Elektronik einen Gleichrichter auf, insbesondere zur Speisung einer Erregerwicklung des Rotors, insbesondere wobei die Elektronik zumindest eine Leiterplatte, einen Kondensator und zumindest eine Diode aufweist. Von Vorteil ist dabei, dass der Gleichrichter zur Versorgung der Erregerwicklung in dem Rotor, insbesondere dem Aufnahmeteil, integriert anordenbar ist. Somit ist der Rotor kompakt ausführbar.

Bei einer vorteilhaften Ausgestaltung ist die Elektronik mittels eines Anschlussteils mit der Erregerwicklung verbindbar. Von Vorteil ist dabei, dass die Erregerwicklung speisbar ist mittels des Drehübertragers.

Bei einer vorteilhaften Ausgestaltung ist das Anschlussteil als Steckverbinder ausgeführt. Von Vorteil ist dabei, dass der Steckverbinder in einfacher Art und Weise mit der Sekundärspule verbindbar und wieder lösbar ist.

Bei einer vorteilhaften Ausgestaltung ist das Aufnahmeteil aus Aluminium ausgeführt. Von Vorteil ist dabei, dass das aus Aluminium ausgeführte Aufnahmeteil als Abschirmung hochfrequenter Felder fungiert.

Die Erfindung wird nun anhand von Abbildungen näher erläutert:

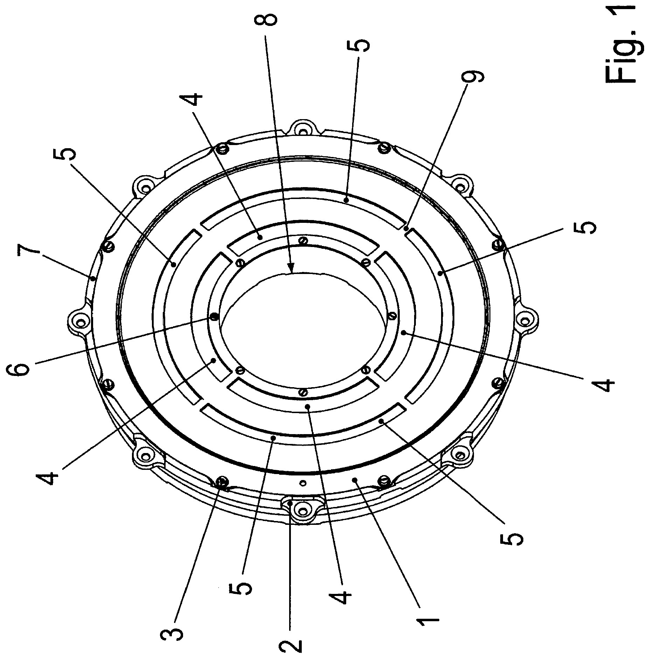

In der Figur 1 ist ein Aufnahmeteil für eine Sekundärspule eines erfindungsgemäßen Drehübertragers in Schrägansicht gezeichnet.

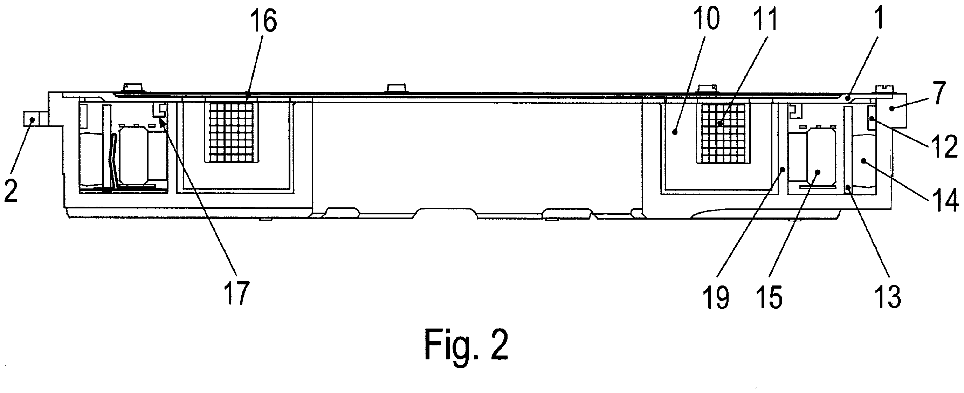

Figur 2 zeigt das Aufnahmeteil für die Sekundärspule in Schnittansicht.

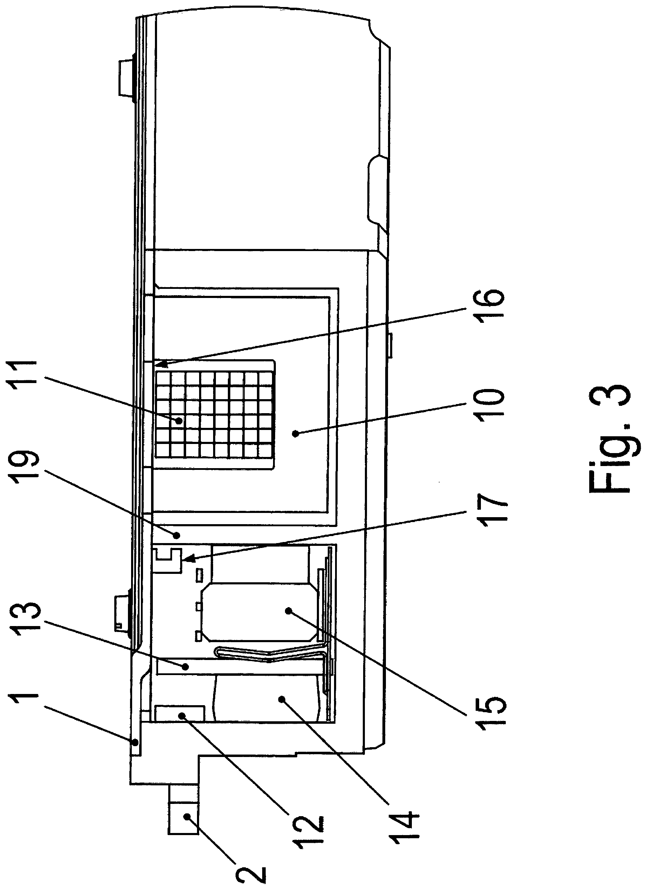

Figur 3 zeigt eine Detailansicht der in Figur 2 dargestellten Schnittansicht des Aufnahmeteils.

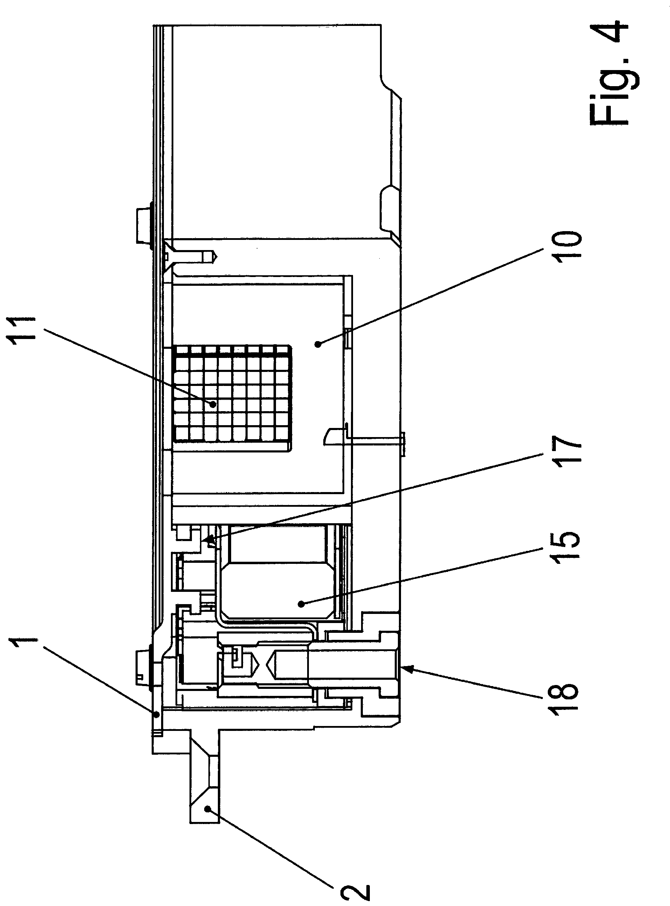

Figur 4 zeigt das Aufnahmeteil für die Sekundärspule in Schnittansicht mit einem anderen Schnittwinkel als Figur 2.

Erfindungsgemäß ist der Elektromotor als fremderregte Synchronmaschine mit Drehübertrager ausgeführt, deren in den Figuren nicht gezeigte Erregerwicklung um Zähne eines Rotorblechpakets vorgesehen ist. Die Erregerwicklung ist mit Vergussmasse vergossen und am radial äußeren Umfang vorzugsweise mit einer Hülse aus glasfaserverstärktem Kunststoff umgeben zur Ermöglichung sehr hoher Drehzahlen.

Das Rotorblechpaket ist auf einem ersten axialen Rotorwellenabschnitt vorgesehen, der mit einem zweiten axialen Rotorwellenabschnitt die Rotorwelle bildet.

Im Bereich des zweiten Rotorwellenabschnitts ist die Sekundärspule des Drehübertragers vorgesehen, die eine Sekundärwicklung aufweist, die als Ringwicklung 11 ausgeführt ist.

Dieser Sekundärspule axial und radial gegenüberstehend ist eine in den Figuren nicht gezeigte Primärspule des Drehübertragers angeordnet. Die Primärspule weist eine Primärwicklung auf, die mit einem Wechselstrom beaufschlagt ist. Dabei sind die Primärwicklung und die Sekundärwicklung induktiv miteinander gekoppelt. Der an der Sekundärwicklung bewirkte Wechselstrom wird einem Gleichrichter zugeführt, so dass der dort erzeugte Gleichstrom der Erregerwicklung zuführbar ist.

Der Gleichrichter weist eine Leiterplatte 13, zumindest zwei Dioden (12, 14) und einen Kondensator 15 auf.

Die zugehörige elektronische Schaltung ist im Bereich des zweiten Rotorwellenabschnitts angeordnet. Vorzugsweise ist die elektronische Schaltung auf größerem Radialabstand angeordnet als die Ringwicklung 11.

Die Ringwicklung 11 ist zumindest teilweise von einem Spulenkern 10 umgeben. Der Spulenkern 10 ist als Jochscheibe ausgeführt. Dabei wird unter Jochscheibe eine Lochscheibe mit zumindest zwei ringförmigen Schenkeln verstanden, welche auf der dem Deckelteil zugewandten Seitenfläche der Lochscheibe angeordnet sind. Vorzugsweise ist die Jochscheibe mit den Schenkeln konzentrisch zur Rotorwellenachse ausgeführt.

Vorzugsweise weist der ringförmige Spulenkern 10 einen U-förmigen Querschnitt auf, wobei die Ringwicklung 11 zwischen den Schenkeln des Spulenkerns 10 angeordnet ist. Der Spulenkern 10 ist konzentrisch zur Rotorwellenachse ausgeführt.

Der Spulenkern 10 ist aus Kernmaterial, insbesondere Ferritmaterial oder Eisenpulver gefertigt.

Das vorzugsweise aus Aluminium ausgeführte Aufnahmeteil 7 nimmt die elektronische Schaltung, den Spulenkern 10 und die Ringwicklung 11 auf. Vorzugsweise ist das Aufnahmeteil 7 an einem axialen Endbereich der Rotorwelle angeordnet und drehfest mit der Rotorwelle verbunden.

Das Aufnahmeteil 7 ist ringförmig und konzentrisch zur Rotorwellenachse ausgeführt. Somit ist das Aufnahmeteil 7 zylindrisch ausgeführt und weist eine zentrierte Bohrung 8 auf, durch welche die Rotorwelle hindurchgeführt ist. Dabei erstreckt sich das Aufnahmeteil 7 in radialer Richtung weiter als in axialer Richtung.

Der Raumbereich für die elektronische Schaltung und der Aufnahmebereich für die Sekundärspule sind im gleichen axialen Bereich angeordnet. Dabei überdeckt der axiale Teilbereich der Ringwicklung 11 den axialen Teilbereich der elektronischen Schaltung zumindest teilweise. Das Aufnahmeteil 7 weist einen zwischen der elektronischen Schaltung und dem Aufnahmebereich für die Ringwicklung 11 angeordneten Trennabschnitt 19 auf, der vorzugsweise als Wandungsabschnitt einstückig mit dem Aufnahmeteil 7 ausgeführt ist.

Die Rotorwelle ist aus dem ersten und zweiten Rotorwellenabschnitt zusammengesetzt und in einer ersten Ausführungsart einstückig ausgeführt. Dabei wird die Rotorwelle aus einem Material ausgeführt, das eine relative Permeabilität von weniger als 20 hat, insbesondere eine Permeabilität zwischen 1 und 10. Hierzu eignet sich beispielhaft Edelstahl.

Auf diese Weise sind Felder abschirmbar, die ansonsten durch die Rotorwelle hindurch vom Bereich der Erregerwicklung zum Bereich der Sekundärwicklung gelangen könnten und dabei eine störende Wirkung entfalten könnten.

Auf dem zweiten Rotorwellenabschnitt ist das Aufnahmeteil 7 drehfest befestigt. Dabei ist die dem Rotorblechpaket zugewandte Seite des Aufnahmeteils 7 mit einem Dynamoblech oder Stahlblech bedeckt. Somit wirkt das Dynamoblech oder Stahlblech magnetisch abschirmend zwischen der Erregerwicklung und der Sekundärwicklung.

Die Rotorwelle ist beidseitig gelagert, wobei die Lagerstellen sich außerhalb des axialen Bereiches des Rotorblechpaketes und der Sekundärwicklung befinden. Also sind axial zwischen den Lagerstellen das Rotorblechpaket und die Sekundärwicklung angeordnet.

Das Aufnahmeteil 7 ist auf seiner von dem Rotorblechpaket abgewandten Seite mit einem Deckelteil 1 verbunden. Dazu weist das Aufnahmeteil 7 Bohrungen auf, insbesondere Gewindebohrungen in welche Verbindungsmittel, insbesondere Schraubteile, einschraubbar sind. Dabei sind die Verbindungsmittel durch Bohrungen 3 in dem Deckelteil 1 hindurchgeführt.

Vorzugsweise sind die Bohrungen 3 in dem Deckelteil 1 und dem Aufnahmeteil 7 auf einem inneren und einem äußeren Kreisbogen in Umfangsrichtung regelmäßig verteilt angeordnet. Vorzugsweise sind die Bohrungen auf dem inneren Kreisbogen, also dessen Radialabstandsbereich kleiner ist als der Radialabstandsbereich des äußeren Kreisbogens, in Umfangsrichtung alternierend mit den Bohrungen des äußeren Kreisbogens angeordnet.

Dabei ist der minimale Radialabstand der Bohrungen 3 größer als der Außenradius der Bohrung 8.

In dem Deckelteil sind Ausnehmungen (4, 5) ausgeführt. Dabei sind Ausnehmungen 4 auf kleinerem Radialabstand angeordnet als weitere Ausnehmungen 5. Die Ausnehmungen (4, 5) sind auf jeweils einem konzentrischen Kreisbogen angeordnet. Vorzugsweise sind die Ausnehmungen (4, 5) als Kreisringabschnitte ausgeführt, zwischen denen in Umfangsrichtung Stegabschnitte 9 angeordnet sind. Vorzugsweise sind die Stegabschnitte 9 in Umfangsrichtung regelmäßig verteilt und/oder radialstrahlenförmig angeordnet.

Die von den Ausnehmungen (4, 5) überdeckten Radialabstandsbereiche überdecken die von den Schenkeln des Spulenkerns überdeckten Radialabstandsbereiche. Dabei erstrecken sich die Ausnehmungen 4 in radialer Richtung weiter als die weiteren Ausnehmungen 5. Der in radialer Richtung zwischen den Ausnehmungen 4 und den weiteren Ausnehmungen 5 angeordnete Radialabstandsbereich wird zumindest teilweise überdeckt von dem Radialabstandsbereich der Ringwicklung 11. Vorzugsweise weist das Deckelteil 1 in diesem Radialabstandsbereich einen Verdickungsabschnitt 16 auf.

Vorzugsweise überdeckt jede Ausnehmung 4 den gleichen ersten Umfangswinkel. Jede weitere Ausnehmung 5 überdeckt den gleichen zweiten Umfangswinkel. Vorzugsweise sind der erste und zweite Umfangswinkel gleich groß.

Das Deckelteil 1 weist zumindest eine dem Aufnahmeteil 7 zugewandte Erhebung 17 auf, diese Erhebung 17 erstreckt sich in axialer Richtung in das Aufnahmeteil 7 hinein. Vorzugsweise ist zumindest eine Erhebung 17 hakenförmig ausgeformt, weist also Hinterschnitt auf. Vorzugsweise erstreckt sich die hakenförmige Erhebung 17 in den Raumbereich der elektronischen Schaltung in dem Aufnahmeteil 7 hinein.

Das Deckelteil 1 ist also mit dem Aufnahmeteil 7 formschlüssig verbunden mittels der Verbindungsmittel 6. Zusätzlich ist Vergussmasse in dem Aufnahmeteil 7 angeordnet, welche das Deckelteil 1 stoffschlüssig mit dem Aufnahmeteil 7 verbindet. Dabei füllt die Vergussmasse, vorzugsweise ein Epoxidharz, die Hohlräume zwischen den Bauteilen in dem Aufnahmeteil 7 aus.

Die Vergussmasse ist vorzugsweise wärmeleitend ausgeführt.

Das Deckelteil 1 ist aus einem nichtmagnetischen Werkstoff hergestellt, also einem Werkstoff mit einer relativen Permeabilität kleiner als 10. Vorzugsweise ist das Deckelteil 1 aus Kunststoff hergestellt, insbesondere aus faserverstärktem Kunststoff, insbesondere aus Glasfaser mit Epoxidharz.

Das Aufnahmeteil 7 weist Verbindungsabschnitte 2 zur Verbindung mit dem Rotorblechpaket auf. Vorzugsweise kragen die Verbindungsabschnitte 2 nach radial außen aus dem Aufnahmeteil 7 aus und weisen Bohrungen auf, durch welche Verbindungsmittel, insbesondere Schraubteile, hindurchführbar sind.

Die elektronische Schaltung ist mittels eines Anschlussteils, insbesondere Steckverbinderteil, mit der Erregerwicklung verbindbar. Dazu weist das Aufnahmeteil 7 eine Bohrung, insbesondere Buchse 18, auf, in welche das Anschlussteil einsteckbar ist.

In einem anderen Ausführungsbeispiel weist das Deckelteil 1 Ausnehmungen auf, wobei der Radialabstandsbereich der jeweiligen Ausnehmung den Radialabstandsbereich des Spulenkerns 10 vollständig überdeckt. Vorzugsweise sind die Ausnehmungen als in Umfangsrichtung voneinander beabstandete, insbesondere regelmäßig beabstandete, Kreisringabschnitte ausgeführt. Vorzugsweise erstrecken sich die Ausnehmungen in Umfangsrichtung maximal doppelt so weit wie die zwischen den Ausnehmungen angeordneten Stegabschnitte.

In einem anderen Ausführungsbeispiel ist das abschirmende Blech nicht am Aufnahmeteil 7 sondern direkt auf der Rotorwelle befestigt, beispielsweise festgekrallt oder anderweitig formschlüssig, stoffschlüssig oder kraftschlüssig mit der Rotorwelle verbunden.

In einem anderen Ausführungsbeispiel wird statt des Ferritmaterials ein im Wesentlichen gleichwirkendes Material verwendet.

In einem anderen Ausführungsbeispiel ist die Rotorwelle mindestens zweistückig ausgebildet, indem der zweite Rotorwellenabschnitt aus einem Material ausgeführt ist, das eine relative Permeabilität von weniger als 20 hat, insbesondere eine zwischen 1 und 10, insbesondere beispielhaft aus Edelstahl, und indem der erste Rotorwellenabschnitt stoffschlüssig verbunden ist mit dem zweiten Rotorwellenabschnitt. Als stoffschlüssige Verbindung hat sich eine reibgeschweißte Verbindung als vorteilhaft erwiesen, wobei die Endbearbeitung der gesamten Welle, also spanende Bearbeitung, nach dem reibschweißenden Verbinden ausgeführt wird. Auf diese Weise ist es ermöglicht, den ersten Rotorwellenabschnitt aus kostengünstigem Stahl zu fertigen, der allerdings eine relative Permeabilität von weit über 20 hat, beispielsweise von über 800 oder über 1000.

Die gesamte Permeabilität gleicht dem Produkt aus der relativen Permeabilität und der Permeabilitätskonstante für Vakuum. Letztere wird auch als Vakuumpermeabilität bezeichnet.

### Bezugszeichenliste

1 Deckelteil
2 Verbindungsabschnitt
3 Bohrung
4 erste Ausnehmung
5 zweite Ausnehmung
6 Verbindungsmittel
7 Aufnahmeteil
8 Bohrung
9 Stegabschnitt
10 Spulenkern aus Kernmaterial, insbesondere Ferrit oder Eisenpulver
11 Ringwicklung
12 Diode
13 Leiterplatte
14 Diode
15 Kondensator
16 Verdickungsabschnitt
17 Erhebung
18 Buchse
19 Trennabschnitt

## Patentansprüche

1. System aufweisend
- einen Drehübertrager zur induktiven Energieübertragung von einer Primärspule an eine Sekundärspule,
- eine Rotorwelle,
- ein Aufnahmeteil (7),
wobei die Sekundärspule drehfest mit der Rotorwelle verbunden ist, welche relativ zur Primärspule drehbar gelagert ist,
wobei die Sekundärspule einen Spulenkern (10) und eine Sekundärwicklung, insbesondere Ringwicklung (11), aufweist, die in dem Aufnahmeteil (7) aufgenommen sind, insbesondere wobei das Aufnahmeteil (7) drehfest mit der Rotorwelle verbunden ist,
wobei der Spulenkern (10) eine Jochscheibe mit zumindest zwei über die Jochscheibe verbundenen Schenkeln aufweist, insbesondere wobei die Sekundärwicklung zwischen den Schenkeln angeordnet ist,
**dadurch gekennzeichnet, dass**
das System ein Deckelteil (1) aufweist, das mit dem Aufnahmeteil (7) verbunden ist,
wobei die Sekundärwicklung zwischen dem Deckelteil (1) und dem Aufnahmeteil (7) angeordnet ist,
wobei der Spulenkern (10) zwischen dem Deckelteil (1) und dem Aufnahmeteil (7) angeordnet ist,
wobei das Deckelteil (1) axial durchgehende, in Umfangsrichtung, insbesondere regelmäßig, voneinander beabstandete Ausnehmungen (4) aufweist,
wobei der Radialabstandsbereich der jeweiligen Ausnehmung (4) den Radialabstandsbereich des Spulenkerns (10) oder zumindest eines ersten Schenkels des Spulenkerns (10) überdeckt, insbesondere vollständig überdeckt,
wobei der von dem Deckelteil (1) überdeckte axiale Bereich überlappt, insbesondere echt überlappt, insbesondere teilweise überdeckt, mit dem von dem Spulenkern (10) überdeckten axialen Bereich, insbesondere wobei der Spulenkern (10) in die jeweilige Ausnehmung (4) axial hineinragt,
insbesondere wobei die Ausnehmungen (4) jeweils als Kreisringabschnitt ausgeformt sind.

2. System nach Anspruch 1,
**dadurch gekennzeichnet, dass**
der Spulenkern (10) als Rotationskörper ausgeführt ist, der einen U-förmigen Querschnitt aufweist, insbesondere wobei die zum Querschnitt zugehörige Schnittebene die radiale und axiale Richtung enthält,
und/oder dass die beiden Schenkel jeweils ringförmig und konzentrisch, insbesondere zur Rotorwellenachse und/oder Achse der Ringwicklung, ausgeführt sind und/oder auf der dem Deckelteil (1) zugewandten Seite der Jochscheibe angeordnet sind.

3. System nach mindestens einem der vorangegangenen Ansprüche,
**dadurch gekennzeichnet, dass**
im jeweiligen Beabstandungsbereich zwischen zwei in Umfangsrichtung benachbarten Ausnehmungen (4) das Deckelteil (1) eine dünnere Wandstärke aufweist als die maximale axiale Wandstärke des Deckteils (1),
insbesondere wobei die in Umfangsrichtung zwischen den jeweils zueinander nächstbenachbarten Ausnehmungen (4) angeordneten Beabstandungsbereiche des Deckelteils (1) Stegabschnitte (9) sind,
insbesondere wobei die axiale Wandstärke der Stegabschnitte (9) kleiner ist als die maximale axiale Wandstärke des Deckteils (1),
insbesondere wobei die Stegabschnitte (9) radialstrahlenförmig angeordnet sind,
insbesondere wobei die Stegabschnitte (9) als in Umfangsrichtung voneinander regelmäßig beabstandete, in axialer Richtung nicht durchgehende Kreisringabschnitte ausgeführt sind,
insbesondere wobei die Stegabschnitte (9) und die Ausnehmungen (4) in Umfangsrichtung einander abwechseln,
insbesondere wobei die Ausnehmungen (4) in Umfangsrichtung voneinander beabstandet sind mittels der Stegabschnitte (9).

4. System nach mindestens einem der vorangegangenen Ansprüche,
**dadurch gekennzeichnet, dass**
das Deckelteil (1) weitere axial durchgehende, in Umfangsrichtung, insbesondere regelmäßig, voneinander beabstandete Ausnehmungen (5) aufweist,
wobei der Radialabstandsbereich der jeweiligen weiteren Ausnehmung (5) den Radialabstandsbereich eines zweiten Schenkels des Spulenkerns (10) überdeckt, insbesondere vollständig überdeckt,
wobei der von dem Deckelteil (1) überdeckte axiale Bereich überlappt, insbesondere echt überlappt, insbesondere teilweise überdeckt, mit dem von dem Spulenkern (10) überdeckten axialen Bereich, insbesondere wobei der zweite Schenkel des Spulenkerns (10) in die jeweilige weitere Ausnehmung (5) axial hineinragt,
insbesondere wobei die weiteren Ausnehmungen (5) jeweils als Kreisringabschnitt ausgeformt sind,
wobei die Ausnehmungen (4) von den weiteren Ausnehmungen (5) radial, also in radialer Richtung, beabstandet sind,
insbesondere wobei die Ausnehmungen (4) auf kleinerem Radialabstand angeordnet sind als die weiteren Ausnehmungen (5).

5. System nach dem vorangegangenen Anspruch, **dadurch gekennzeichnet, dass**
die axiale Wandstärke des Deckelteils (1) zwischen zwei in Umfangsrichtung nächstbenachbarten Ausnehmungen (4) und/oder zwischen zwei in Umfangsrichtung nächstbenachbarten weiteren Ausnehmungen (5) kleiner ist als die Wandstärke des Deckelteils (1) zwischen einer Ausnehmung (4) und einer in radialer Richtung zu dieser nächstbenachbarten weiteren Ausnehmung (5),
und/oder dass
jede Ausnehmung (4) einen gleichen ersten Umfangswinkel überdeckt,
und/oder dass jede weitere Ausnehmung (5) einen gleichen zweiten Umfangswinkel überdeckt,
insbesondere wobei der erste und zweite Umfangswinkel gleich groß sind.

6. System nach mindestens einem der vorangegangenen Ansprüche,
**dadurch gekennzeichnet, dass**
der erste Schenkel des Spulenkerns (10) auf kleinerem Radialabstand als der zweite Schenkel des Spulenkerns (10) angeordnet ist, insbesondere wobei jeder Schenkel ringförmig ausgeführt ist und wobei die Schenkel konzentrisch zur Wellenachse angeordnet sind, insbesondere wobei der Spulenkern (10) einen U-förmigen Querschnitt aufweist.

7. System nach mindestens einem der vorangegangenen Ansprüche,
**dadurch gekennzeichnet, dass**
in dem Aufnahmeteil (7) Vergussmasse angeordnet ist,
wobei die Vergussmasse stoffschlüssig verbunden ist mit dem Deckelteil (1),
insbesondere wobei das Deckelteil (1) formschlüssig verbunden ist mit der Vergussmasse mittels zumindest einer Erhebung (17), insbesondere einem Haken, welche axial in die Vergussmasse hineinragt, insbesondere wobei die Erhebung (17) mit Hinterschnitt ausgeführt ist,
insbesondere wobei die Erhebung (17) einstückig mit dem Deckelteil (1) ausgeführt ist.

8. System nach mindestens einem der vorangegangenen Ansprüche,
**dadurch gekennzeichnet, dass**
das Deckelteil (1) aus einem Material mit relativer Permeabilität kleiner als 10 hergestellt ist, insbesondere aus einem Faserwerkstoff hergestellt ist, insbesondere aus einem faserverstärkten Kunststoff,
insbesondere wobei das Deckelteil (1) als Kunststoffspritzgussteil, Drehteil oder Frästeil ausgeführt ist.

9. System nach mindestens einem der vorangegangenen Ansprüche,
**dadurch gekennzeichnet, dass**
das Deckelteil (1) formschlüssig mit dem Aufnahmeteil (7) verbunden ist, insbesondere schraubverbunden, insbesondere mittels zumindest eines Schraubmittels.

10. System nach mindestens einem der vorangegangenen Ansprüche,
**dadurch gekennzeichnet, dass**
der Spulenkern (10) sich in axialer Richtung weiter erstreckt als die Sekundärwicklung,
insbesondere wobei die Sekundärwicklung das Deckelteil (1) berührt.

11. Elektromotor, insbesondere fremderregte Synchronmaschine, aufweisend einen Rotor mit zumindest einer Rotorwelle und ein System nach mindestens einem der vorangegangenen Ansprüche,
wobei in einem ersten axialen Bereich der Rotorwelle ein Rotorblechpaket und in einem zweiten axialen Bereich der Rotorwelle die Sekundärspule angeordnet ist,
wobei die Primärspule der Sekundärspule axial gegenüberstehend angeordnet ist,
**dadurch gekennzeichnet, dass**
der Rotor mit dem Deckelteil (1) verbunden ist, wobei das Deckelteil (1) axial zwischen der Sekundärspule und der Primärspule angeordnet ist.

12. Elektromotor nach Anspruch 11,
**dadurch gekennzeichnet, dass**
das Aufnahmeteil (7) einen Aufnahmebereich für eine Elektronik und einen Aufnahmebereich für die Sekundärspule aufweist,
insbesondere wobei der Aufnahmebereich für die Elektronik auf größerem Radialabstand als der Aufnahmebereich für die Sekundärspule angeordnet ist,
insbesondere wobei zwischen dem Aufnahmebereich für die Elektronik und dem Aufnahmebereich für die Sekundärspule ein Trennabschnitt (19) angeordnet ist, insbesondere wobei der Trennabschnitt (19) am Aufnahmeteil (7) einteilig, also einstückig, ausgeformt ist.

13. Elektromotor nach dem vorangegangenen Anspruch, **dadurch gekennzeichnet, dass**
das Deckelteil (1) beabstandet ist von der Elektronik,
insbesondere wobei zwischen dem Deckelteil (1) und der Elektronik Vergussmasse angeordnet ist.

14. Elektromotor nach mindestens einem der vorangegangenen Ansprüche 12 oder 13, **dadurch gekennzeichnet, dass**
die Elektronik einen Gleichrichter aufweist, insbesondere zur Speisung einer Erregerwicklung des Rotors,
insbesondere wobei die Elektronik zumindest eine Leiterplatte (13), einen Kondensator (15) und zumindest eine Diode (12, 14) aufweist,
und/oder dass
die Elektronik mittels eines Anschlussteils mit der Erregerwicklung verbindbar ist,
insbesondere wobei das Anschlussteil als Steckverbinder ausgeführt ist,
insbesondere wobei das Aufnahmeteil eine Buchse (18) aufweist zur Aufnahme des Steckverbinders.

15. Elektromotor nach mindestens einem der vorangegangenen Ansprüche 11 bis 14, **dadurch gekennzeichnet, dass**
das Aufnahmeteil (7) aus Aluminium ausgeführt ist.

## Claims

1. System comprising
- a rotary transformer for inductively transmitting energy from a primary coil to a secondary coil,
- a rotor shaft,
- a receiving part (7),
the secondary coil being connected for conjoint rotation to the rotor shaft, which is mounted so as to be rotatable relative to the primary coil,
the secondary coil having a coil core (10) and a secondary winding, in particular an annular winding (11), which is received in the receiving part (7), the receiving part (7) in particular being connected to the rotor shaft for conjoint rotation,
the coil core (10) comprising a yoke disc having at least two legs connected by means of the yoke disc, the secondary winding in particular being arranged between the legs, **characterised in that**
the system comprises a lid part (1), which is connected to the receiving part (7),
the secondary winding being arranged between the lid part (1) and the receiving part (7), the coil core (10) being arranged between the lid part (1) and the receiving part (7),
the lid part (1) having axial through-openings (4) spaced apart from one another, in particular regularly, in the circumferential direction,
the radial clearance region of each opening (4) covering, in particular fully covering, the radial clearance region of the coil core (10) or at least of a first leg of the coil core (10),
the axial region covered by the lid part (1) overlapping, in particular substantially overlapping, in particular partly overlapping, the axial region covered by the coil core (10), the coil core (10) in particular protruding axially into the relevant opening (4),
the openings (4) in particular each being formed as segments of an annulus.

2. System according to claim 1,
**characterised in that**
the coil core (10) is configured as a rotational body having a U-shaped cross section, the sectional plane associated with the cross section in particular including the radial and axial directions,
and/or **in that** the two legs are each formed annularly and concentrically, in particular concentrically with the rotor shaft axis and/or the axis of the annular winding, and/or are arranged on the side of the yoke disc facing the lid part (1).

3. System according to at least one of the preceding claims,
**characterised in that**
in each spacing region between two adjacent openings (4) in the circumferential direction, the lid part (1) has a thinner wall thickness than the maximum axial wall thickness of the lid part (1),
the spacing regions of the lid part (1) that are arranged in the circumferential direction in each case between neighbouring openings (4) being in particular web portions (9),
the axial wall thickness of the web portions (9) in particular being smaller than the maximum axial wall thickness of the lid part (1),
the web portions (9) in particular being arranged in the manner of radial half-lines,
the web portions (9) in particular being configured as segments of an annulus that are regularly spaced apart from one another in the circumferential direction and are discontinuous in the axial direction,
the web portions (9) and the openings (4) in particular alternating in the circumferential direction,
the openings (4) in particular being spaced apart from one another in the circumferential direction by means of the web portions (9).

4. System according to at least one of the preceding claims,
**characterised in that**
the lid part (1) has additional axial through-openings (5) spaced apart from one another, in particular regularly, in the circumferential direction,
the radial clearance region of each additional opening (5) covering, in particular fully covering, the radial clearance region of a second leg of the coil core (10),
the axial region covered by the lid part (1) overlapping, in particular substantially overlapping, in particular partly overlapping, the axial region covered by the coil core (10), the second leg of the coil core (10) in particular protruding axially into the relevant additional opening (5),
the additional openings (5) in particular each being formed as segments of an annulus,
the openings (4) being spaced apart from the additional openings (5) radially, i.e. in the radial direction,
the openings (4) in particular being arranged at a smaller radial distance than the additional openings (5).

5. System according to the preceding claim,
**characterised in that**
the axial wall thickness of the lid part (1) between two neighbouring openings (4) in the circumferential direction and/or between two neighbouring additional openings (5) in the circumferential direction is smaller than the wall thickness of the lid part (1) between an opening (4) and a neighbouring additional opening (5) in the radial direction,
and/or **in that**
each opening (4) covers an identical first circumferential angle,
and/or **in that** each additional opening (5) covers an identical second circumferential angle, the first and second circumferential angles in particular being the same.

6. System according to at least one of the preceding claims,
**characterised in that**
the first leg of the coil core (10) is arranged at a smaller radial distance than the second leg of the coil core (10), each leg in particular being annular and the legs being arranged concentrically with the shaft axis, the coil core (10) in particular having a U-shaped cross section.

7. System according to at least one of the preceding claims,
**characterised in that**
casting compound is arranged in the receiving part (7),
the casting compound being integrally bonded to the lid part (1),
the lid part (1) in particular being interlocked with the casting compound by means of at least one protrusion (17), in particular a hook, that protrudes axially into the casting compound, the protrusion (17) in particular being configured to have an undercut,
the protrusion (17) in particular being configured in one piece with the lid part (1).

8. System according to at least one of the preceding claims,
**characterised in that**
the lid part (1) is made of a material having a relative permeability lower than 10, in particular is made of a fibre material, in particular of a fibre-reinforced plastics material,
the lid part (1) in particular being configured as a plastics injection-moulded part, a turned part or a milled part.

9. System according to at least one of the preceding claims,
**characterised in that**
the lid part (1) is interlocked with the receiving part (7), in particular is screwed thereto, in particular by means of at least one screw means.

10. System according to at least one of the preceding claims,
**characterised in that**
the coil core (10) extends further in the axial direction than the secondary winding,
the secondary winding in particular being in contact with the lid part (1).

11. Electric motor, in particular a separately excited synchronous machine, comprising a rotor having at least one rotor shaft and a system according to at least one of the preceding claims,
a rotor laminated core being arranged in a first axial region of the rotor shaft and the secondary coil being arranged in a second axial region of the rotor shaft,
the primary coil being arranged axially opposite the secondary coil,
**characterised in that**
the rotor is connected to the lid part (1), the lid part (1) being arranged axially between the secondary coil and the primary coil.

12. Electric motor according to claim 11,
**characterised in that**
the receiving part (7) has a receiving region for electronics and a receiving region for the secondary coil,
the receiving region for the electronics in particular being arranged at a greater radial distance than the receiving region for the secondary coil,
a dividing portion (19) in particular being arranged between the receiving region for the electronics and the receiving region for the secondary coil,
the dividing portion (19) in particular being formed as one part, i.e. in one piece, on the receiving part (7).

13. Electric motor according to the preceding claim,
**characterised in that**
the lid part (1) is spaced apart from the electronics,
casting compound in particular being arranged between the lid part (1) and the electronics.

14. Electric motor according to at least one of the preceding claims 12 or 13,
**characterised in that**
the electronics has a rectifier, in particular for feeding an exciter winding of the rotor,
the electronics in particular having at least one printed circuit board (13), a capacitor (15) and at least one diode (12, 14),
and/or **in that**
the electronics can be connected to the exciter winding by means of a connection part, the connection part in particular being configured as a plug-in connector,
the receiving part in particular having a socket (18) for receiving the plug-in connector.

15. Electric motor according to at least one of the preceding claims 11 to 14,
**characterised in that**
the receiving part (7) is made of aluminium.

## Revendications

1. Système présentant
- un transformateur tournant pour la transmission d'énergie par induction d'une bobine primaire à une bobine secondaire,
- un arbre de rotor,
- une partie de réception (7),
dans lequel la bobine secondaire est reliée de manière solidaire en rotation à l'arbre de rotor qui est monté tournant par rapport à la bobine primaire,
dans lequel la bobine secondaire présente un noyau de bobine (10) et un enroulement secondaire, en particulier un enroulement annulaire (11), qui sont reçus dans la partie de réception (7), en particulier dans lequel la partie de réception (7) est reliée de manière solidaire en rotation à l'arbre de rotor,
dans lequel le noyau de bobine (10) présente un disque de culasse avec au moins deux branches reliées par le disque de culasse, en particulier dans lequel l'enroulement secondaire est disposé entre les branches,
**caractérisé en ce que**
le système présente une partie couvercle (1) qui est reliée à la partie de réception (7) dans lequel l'enroulement secondaire est disposé entre la partie couvercle (1) et la partie de réception (7),
dans lequel le noyau de la bobine (10) est disposé entre la partie couvercle (1) et la partie de réception (7),
dans lequel la partie couvercle (1) présente des évidements (4) traversants axialement, qui sont espacés les uns des autres, en particulier régulièrement, dans la direction circonférentielle,
dans lequel la zone d'espacement radial de l'évidement respectif (4) recouvre, en particulier complètement, la zone d'espacement radial du noyau de bobine (10) ou au moins d'une première branche du noyau de bobine (10),
dans lequel la zone axiale recouverte par la partie couvercle (1) chevauche, en particulier chevauche véritablement, en particulier recouvre partiellement, la zone axiale recouverte par le noyau de bobine (10), en particulier dans lequel le noyau de bobine (10) fait saillie axialement dans l'évidement respectif (4),
en particulier dans lequel les évidements (4) sont formés chacun comme un segment d'anneau de cercle.

2. Système selon la revendication 1,
**caractérisé en ce que**
le noyau de bobine (10) est réalisé sous la forme d'un corps de révolution qui présente une section transversale en forme de U, en particulier dans lequel le plan de coupe associé à la section transversale contient la direction radiale et axiale,
et/ou que les deux branches sont chacune réalisées en forme d'anneau et de manière concentrique, en particulier par rapport à l'axe de l'arbre de rotor et/ou à l'axe de l'enroulement annulaire, et/ou sont disposées sur le côté du disque de culasse qui est tourné vers la partie couvercle (1).

3. Système selon au moins l'une des revendications précédentes,
**caractérisé en ce que**
dans la zone d'espacement respective entre deux évidements (4) adjacents dans la direction circonférentielle, la partie couvercle (1) présente une épaisseur de paroi plus faible que l'épaisseur de paroi axiale maximale de la partie couvercle (1),
en particulier dans lequel les zones d'espacement de la partie couvercle (1) disposées entre les évidements (4) respectivement immédiatement adjacents dans la direction circonférentielle sont des sections de liaison (9),
en particulier dans lequel l'épaisseur de paroi axiale des sections de liaison (9) est inférieure à l'épaisseur de paroi axiale maximale de la partie couvercle (1),
en particulier dans lequel les sections de liaison (9) sont disposées en forme de rayons radiaux,
en particulier dans lequel les sections de liaison (9) sont réalisées sous la forme de segments d'anneau de cercle régulièrement espacés les unes des autres dans la direction circonférentielle et non traversants dans la direction axiale,
en particulier dans lequel les sections de liaison (9) et les évidements (4) alternent dans la direction circonférentielle,
en particulier dans lequel les évidements (4) sont espacés les uns des autres dans la direction circonférentielle au moyen des sections de liaison (9).

4. Système selon au moins l'une des revendications précédentes,
**caractérisé en ce que**
la partie couvercle (1) présente d'autres évidements (5) traversants axialement et espacés les uns des autres, en particulier régulièrement, dans la direction circonférentielle,
dans lequel la zone d'espacement radial de l'autre évidement respectif (5) recouvre, en particulier complètement, la zone d'espacement radial d'une deuxième branche du noyau de bobine (10),
dans lequel la zone axiale recouverte par la partie couvercle (1) chevauche, en particulier chevauche véritablement, en particulier recouvre partiellement, la zone axiale recouverte par le noyau de bobine (10), en particulier dans lequel la deuxième branche du noyau de bobine (10) fait saillie axialement dans l'autre évidement respectif (5),
en particulier dans lequel les autres évidements (5) sont formés chacun comme un segment d'anneau de cercle,
dans lequel les évidements (4) sont espacés radialement, c'est-à-dire dans la direction radiale, des autres évidements (5),
en particulier dans lequel les évidements (4) sont disposés à une plus petite distance radiale que les autres évidements (5).

5. Système selon la revendication précédente,
**caractérisé en ce que**
l'épaisseur de paroi axiale de la partie couvercle (1) entre deux évidements (4) immédiatement adjacents dans la direction circonférentielle et/ou entre deux autres évidements (5) immédiatement adjacents dans la direction circonférentielle est inférieure à l'épaisseur de paroi de la partie couvercle (1) entre un évidement (4) et un autre évidement (5) immédiatement adjacent à celui-ci dans la direction radiale,
et/ou que chaque évidement (4) recouvre un même premier angle circonférentiel,
et/ou que chaque autre évidement (5) recouvre un même deuxième angle circonférentiel, en particulier dans lequel le premier et le deuxième angle circonférentiel sont égaux.

6. Système selon au moins l'une des revendications précédentes,
**caractérisé en ce que**
la première branche du noyau de bobine (10) est disposée à une distance radiale plus petite que la deuxième branche du noyau de bobine (10), en particulier dans lequel chaque branche est réalisée en forme d'anneau et dans lequel les branches sont disposées concentriquement à l'axe de l'arbre, en particulier dans lequel le noyau de bobine (10) présente une section transversale en forme de U.

7. Système selon au moins l'une des revendications précédentes,
**caractérisé en ce**
**qu'**une masse de scellement est disposée dans la partie de réception (7),
dans lequel la masse de scellement est reliée à la partie couvercle (1) par coopération de matières,
en particulier dans lequel la partie couvercle (1) est reliée à la masse de scellement par complémentarité de forme au moyen d'au moins une élévation (17), en particulier d'un crochet, qui fait saillie axialement dans la masse de scellement, en particulier dans lequel l'élévation (17) est réalisée avec une contre-dépouille,
en particulier dans lequel l'élévation (17) est réalisée d'une seule pièce avec la partie couvercle (1).

8. Système selon au moins l'une des revendications précédentes,
**caractérisé en ce que**
la partie couvercle (1) est constituée d'un matériau ayant une perméabilité relative inférieure à 10, en particulier est constituée d'un matériau fibreux, en particulier d'une matière plastique renforcée par des fibres,
en particulier dans lequel la partie couvercle (1) est réalisée sous la forme d'une pièce moulée par injection de matière plastique, d'une pièce tournée ou d'une pièce fraisée.

9. Système selon au moins l'une des revendications précédentes,
**caractérisé en ce que**
la partie couvercle (1) est reliée à la partie de réception (7) par complémentarité de forme, en particulier par vissage, en particulier au moyen d'au moins un moyen de vissage.

10. Système selon au moins l'une des revendications précédentes,
**caractérisé en ce que**
le noyau de la bobine (10) s'étend plus loin que l'enroulement secondaire dans la direction axiale,
en particulier dans lequel l'enroulement secondaire touche la partie couvercle (1).

11. Moteur électrique, en particulier machine synchrone à excitation séparée, présentant un rotor avec au moins un arbre de rotor et un système selon au moins l'une des revendications précédentes,
dans lequel un empilement de tôles de rotor est disposé dans une première zone axiale de l'arbre de rotor et la bobine secondaire est disposée dans une deuxième zone axiale de l'arbre de rotor,
dans lequel la bobine primaire est disposée axialement en face de la bobine secondaire, **caractérisé en ce que**
le rotor est relié à la partie couvercle (1), la partie couvercle (1) étant disposée axialement entre la bobine secondaire et la bobine primaire.

12. Moteur électrique selon la revendication 11,
**caractérisé en ce que**
la partie de réception (7) présente une zone de réception pour une électronique et une zone de réception pour la bobine secondaire,
en particulier dans lequel la zone de réception pour l'électronique est disposée à une distance radiale plus grande que la zone de réception pour la bobine secondaire,
en particulier dans lequel une section de séparation (19) est disposée entre la zone de réception pour l'électronique et la zone de réception pour la bobine secondaire,
en particulier dans lequel la section de séparation (19) est formée d'une seule pièce, c'est-à-dire d'un seul tenant, sur la partie de réception (7).

13. Moteur électrique selon la revendication précédente,
**caractérisé en ce que**
la partie couvercle (1) est espacée de l'électronique,
en particulier dans lequel une masse de scellement est disposée entre la partie couvercle (1) et l'électronique.

14. Moteur électrique selon au moins l'une des revendications précédentes 12 ou 13, **caractérisé en ce que**
l'électronique présente un redresseur, en particulier pour l'alimentation d'un enroulement d'excitation du rotor,
en particulier dans lequel l'électronique présente au moins une carte de circuit imprimé (13), un condensateur (15) et au moins une diode (12, 14),
et/ou que l'électronique peut être reliée à l'enroulement d'excitation au moyen d'une partie de connexion,
en particulier dans lequel la partie de connexion est réalisée sous la forme d'un connecteur,
en particulier dans lequel la partie de réception présente une prise (18) pour recevoir le connecteur.

15. Moteur électrique selon au moins l'une des revendications précédentes 11 à 14, **caractérisé en ce que**
la partie de réception (7) est réalisée en aluminium.
